# EUROPÄISCHE PATENTSCHRIFT

(11) **EP 2 019 961 B1**
(45) Veröffentlichungstag und Bekanntmachung des Hinweises auf die Patenterteilung: **11.07.2018**
(21) Anmeldenummer: 07722376.6
(22) Anmeldetag: 07.05.2007
(51) Int. Cl.: G01B 11/24, G06T 7/55, G02B 26/10

(54) **VERFAHREN ZUM ERZEUGEN VON BILDINFORMATIONEN**
METHOD FOR GENERATING IMAGE INFORMATION
PROCÉDÉ POUR LA GÉNÉRATION D'INFORMATIONS D'IMAGES

(30) Priorität: 24.05.2006 DE 102006024864; 07.07.2006 DE 102006031833
(43) Veröffentlichungstag der Anmeldung: 04.02.2009
(73) Patentinhaber: Dr. Wirth Grafische Technik GmbH & Co. KG, 60437 Frankfurt am Main (DE)
(72) Erfinder: HÜMÖLLER, Hans, 64832 Babenhausen (DE)
(74) Vertreter: Patent- und Rechtsanwälte Ullrich & Naumann
(86) Internationale Anmeldenummer: PCT/DE2007/000822
(87) Internationale Veröffentlichungsnummer: WO 2007/134567

(56) Entgegenhaltungen:
- WO-A1-92/07233
- WO-A1-97/05449
- DE-A1- 10 236 250
- GB-A- 2 292 605
- US-A- 4 158 507
- US-A- 6 054 712
- US-B1- 6 616 044
- STAMOS J ET AL: "3-D MODEL CONSTRUCTION USING RANGE AND IMAGE DATA", PROCEEDINGS 2000 IEEE CONFERENCE ON COMPUTER VISION AND PATTERN RECOGNITION. CVPR 2000. HILTON HEAD ISLAND, SC, JUNE 13-15, 2000; [PROCEEDINGS OF THE IEEE COMPUTER CONFERENCE ON COMPUTER VISION AND PATTERN RECOGNITION], LOS ALAMITOS, CA : IEEE COMP., 13 June 2000 (2000-06-13), pages 531-536, XP001035614, ISBN: 978-0-7803-6527-8
- ZAKAI Y ET AL: "THREE-DIMENSIONAL MODELING AND EFFECTS ON STILL IMAGES", COMPUTER GRAPHICS FORUM, WILEY-BLACKWELL PUBLISHING LTD, GB, vol. 15, no. 3, 1 January 1996 (1996-01-01), page C03, XP000992358, ISSN: 0167-7055, DOI: 10.1111/1467-8659.1530003

## Beschreibung

Die Erfindung betrifft ein Verfahren zum Erzeugen von Bildinformationen aus einem zu scannenden Gegenstand mittels einer Scanvorrichtung, wobei der zu scannende Gegenstand eine oder mehrere Oberflächen, einen oder mehrere Körper und/oder einen Raum umfassen kann, wobei die Scanvorrichtung oder zumindest Teile der Scanvorrichtung oder der Gegenstand selbst während des Scanvorgangs bewegt wird, wobei der zu scannende Gegenstand durch die Scanvorrichtung zum Gewinnen von zweidimensionalen Bildinformationen, d.h. bezüglich Farbe, Farbverläufe und Farbkontraste, und zum Gewinnen von dreidimensionalen Bildinformationen, d.h. bezüglich des Reliefs oder des Höhenprofils des Gegenstands, im Bereich einer Scanschicht gescannt wird, wobei aus den gewonnenen zwei- und dreidimensionalen Bildinformationen unter Verwendung digitaler Filter eine zweidimensionale Darstellung berechnet wird, und wobei beim Übergang zu der zweidimensionalen Darstellung die dreidimensionalen Bildinformationen mit den zweidimensionalen Bildinformationen derart kombiniert werden, dass eine naturgetreue dreidimensionale Anmutung der berechneten zweidimensionalen Darstellung erreicht wird und wobei Höheninformationen vorzugsweise mit Helligkeitswerten ausgedrückt werden.

In vielen Bereichen der digitalen Bildverarbeitung ist es notwendig, zunächst aus einem körperlich vorhandenen Gegenstand Bildinformationen zu extrahieren. Dazu wird der Gegenstand mittels einer geeigneten Scanvorrichtung abgetastet und in einer für Digitalrechner geeigneten Form zur Verfügung gestellt. Derartige Bildinformationen werden beispielsweise bei dreidimensionalen Animationen, in CAD-Systemen oder zum Vermessen von Objekten benötigt. Andererseits kann durch Kombination von zweidimensionalen Bildinformationen (Farbe) mit dreidimensionalen Bildinformationen (Form) eine zweidimensionale Darstellung erzeugt werden, die für das menschliche Auge von einem dreidimensionalen Original nicht oder zumindest nicht auf den ersten Blick unterscheidbar ist. Ein derartiges Verfahren ist beispielsweise aus der DE 102 36 250 A1 bekannt.

Dazu wird der zu scannenden Gegenstand, der eine oder mehrere Oberflächen, einen oder mehrere Körper und/oder einen Raum umfassen kann, mittels der verschiedensten Verfahren abgetastet. Die einfachsten Systeme verwenden lichtempfindliche Elemente, die von dem beleuchteten Gegenstand reflektiertes Licht detektieren und daraus Helligkeits- und/oder Farbwerte generieren. Dadurch lassen sich auf einfache Art und Weise zweidimensionale Bildinformationen gewinnen. Daneben sind komplexere Systeme zum Gewinnen von zweidimensionalen Bildinformationen bekannt. Lediglich beispielhaft sei hier auf Kamerasysteme verwiesen.

Bei dem Erzeugen von dreidimensionalen Bildinformationen können beispielsweise mehrere Kameras genutzt werden, deren Bilder mittels Triangulationsverfahren zu dreidimensionalen Informationen zusammengefügt werden. Andere Verfahren nutzen Laserstrahlen, die auf den zu scannenden Gegenstand gelenkt und von diesem reflektiert werden. Durch Messung der Laufzeit des Laserstrahls kann auf die Entfernung des beleuchteten Punkts vom Scankopf geschlossen werden und hieraus dreidimensionale Bildinformationen extrahiert werden. Des Weiteren sind konfokale Systeme im Einsatz, bei denen ein Lichtstrahl auf die zu scannende Oberfläche fokussiert wird. Befindet sich der Fokus infolge von Änderungen im Profil der Oberfläche nicht mehr auf der zu scannenden Oberfläche, so wird mittels einer automatischen Fokussierungsschaltung der Lichtstrahl nachfokussiert. Auf diese Weise lassen sich ebenso dreidimensionale Bildinformationen gewinnen. Darüber hinaus sind viele weitere Verfahren aus der Praxis bekannt, mit denen zwei- und/ oder dreidimensionale Bildinformationen gewonnen werden können.

Bei nahezu allen Scanverfahren wird die Scanvorrichtung oder zumindest Teile der Scanvorrichtung oder der Gegenstand selbst bewegt. Dadurch lassen sich die zu scannenden Gegenstände besser und genauer abtasten. Verzerrungen durch eine ungenaue Abbildung der eingesetzten Optiken in unterschiedlichen Bereichen oder durch Abtasten der Oberfläche aus unterschiedlichen Raumwinkeln können damit vermieden werden. Die Scanvorrichtung wird dabei meist entlang einer Ebene, einer Zylinderoberfläche, einer Kugeloberfläche oder anderen geometrischen Formen bewegt.

Allen bekannten Scanverfahren ist gemein, dass bedingt durch die sonst auftretenden Verzerrungen der den Gegenstand abtastende Strahlengang senkrecht zu der Scanschicht ausgerichtet sein muss. Dies wird zum einen dadurch erreicht, dass der Gegenstand äußerst genau positioniert und ausgerichtet wird. Zum anderen muss die Ebene der Bewegung der Scanvorrichtung sehr genau auf die Lage der Scanschicht abgestimmt sein. Dadurch ist die Positionierung und Ausrichtung des Gegenstands und die Steuerung der Scanvorrichtung jedoch äußerst aufwändig.

Aus der US 6,616,044 B1 ist ein Verfahren zum Erzeugen von Bildinformationen mittels eines Barcodescanners bekannt. Ein Scanlichtstrahl tastet das Objekt, das den Barcode trägt, ab. Neben dem Barcode kann auch die Größe und Oberflächenbeschaffenheit des Objekts erfasst werden. Hieraus lässt sich ein grobes dreidimensionales Bild des Objekts generieren.

Die US 6,054,712 A betrifft eine Vorrichtung zur Bestimmung der inneren Struktur und Zusammensetzung von Objekten, insbesondere von Gepäckstücken im Flugverkehr. Dazu wird das Objekt mit Röntgenstrahlung bestrahlt. In einem ersten Schritt wird die das Objekt durchdringende Röntgenstrahlung detektiert. In einem zweiten Schritt wird die beim Durchdringen des Objektes gestreute Röntgenstrahlung detektiert. Anhand von Erfahrungswerten lässt sich durch die Intensität bzw. den Streuwinkel der gestreuten Röntgenstrahlen auf das Material im Inneren des Objektes schließen. Die beiden Messungen liefern ein dreidimensionales Bild des Objektes mit den sich im Inneren befindlichen Substanzen.

Aus der US 4,158,507 A1 ist eine Vorrichtung zur Oberflächenanalyse von Werkstücken bekannt. Die Vorrichtung weist einen Laser zum Scannen eines Gegenstands auf. Das an der Oberfläche des zu scannenden Gegenstands reflektierte Licht wird detektiert und daraus die Oberflächenbeschaffenheit des zu scannenden Gegenstandes bestimmt.

Die GB 2 292 605 A betrifft eine Scanvorrichtung zur Bestimmung der dreidimensionalen Eigenschaften eines Gegenstands. Der Gegenstand wird durch einen Beleuchtungslichtstrahl abgetastet und das an der Oberfläche des Gegenstands reflektierte Licht von einem Fotodetektor detektiert. Anhand der so erzeugten Bildinformationen werden dreidimensionalen Charakteristika des Gegenstands bestimmt und für die 3D-Software eines Computers lesbar gemacht.

Stamos et al: "3-D Model Construction Using Range and Image Data", Proceedings 2000 IEEE Conference on Computer Vision and Pattern Recognition. Los Alamitos, CA: IEEE COMP., 13 Juni 2000, Seiten 531-536 offenbart ein Verfahren zum automatischen Erzeugen von dreidimensionalen Modellen der Welt, insbesondere städtische Szenerien, beispielsweise für fotorealistische virtuelle Realität oder für Stadtplanung. Hierzu wird aus einer Vielzahl von Entfernungsscans ein dreidimensionales Model extrahiert und in das dreidimensionale Model zweidimensionale Bildinformationen eingepasst.

Zakai et al.: "Three-Dimensional Modeling and Effects on Still Images", Computer Graphics Forum, Wiley-Blackwell Publishing Ltd., GB, vol. 15, no. 3, 1 Januar 1996, Seite C03 offenbart ein Verfahren zur Anwendung von dreidimensionalen Bildeffekten auf zweidimensionale Bilder. In einem ersten Schritt werden dazu die Parameter einer Kamera mittels Kamerakalibrierung extrahiert. Anschließend werden Objekte basierend auf dem zweidimensionalen Bild aufgebaut. Die extrahierten Objekte werden mittels 3D-Polyeder dargestellt. Basierend auf diesen extrahierten Daten kann das zweidimensionale Bild manipuliert werden, beispielsweise durch 3D-Ausschneiden und Einfügen, 3D-Bewegungsunschärfe, 3D-Deformation, virtuelle Beleuchtung oder virtuelle Schatten.

Scanvorrichtungen und -verfahren, bei denen ein dreidimensionales Objekt zum Gewinnen von zwei- und/oder dreidimensionalen Bildinformationen gescannt wird, sind beispielsweise aus der WO 97/05449 A1 oder der WO 92/07233 A1 bekannt.

Der vorliegenden Erfindung liegt die Aufgabe zugrunde, ein Verfahren der eingangs genannten Art derart auszugestalten und weiterzubilden, dass ein möglichst einfaches Erzeugen von Bildinformationen mit hoher Präzision bei gleichzeitig möglichst einfacher Bedienbarkeit der eingesetzten Vorrichtung ermöglicht wird. Dabei soll weiter erreicht werden, dass möglichst gut verwertbare Bildinformationen erzielt werden. Insbesondere sollten Bildinformationen entstehen, die für eine möglichst naturgetreue Wiedergabe der gewonnen Bildinformationen in einer zweidimensionalen Darstellung geeignet sind.

Erfindungsgemäß wird die voranstehende Aufgabe durch die Merkmale des Patentanspruchs 1 gelöst. Danach ist das in Rede stehende Verfahren dadurch gekennzeichnet, dass der den Gegenstand abtastende Strahlengang in einem beliebigen Winkel zur Scanschicht orientiert eingestellt wird und/oder dass die Scanschicht in einer beliebigen Lage bezüglich des zu scannenden Gegenstands gewählt wird, wobei durch freie Wahl des Winkels zwischen dem abtastenden Strahlengang und der Scanschicht geschuppte Teilbilder entstehen, die nicht in einer Ebene liegen und insbesondere im Bezug zur Scanschicht verkippt sind, wodurch die einzelnen Teilbilder entzerrt werden müssen, damit sie zu einem gemeinsamen Bild zusammenfügbar sind, dass Verzerrungen, die durch den beliebigen Winkel zwischen dem abtastenden Strahlengang und der Scanschicht hervorgerufen werden, mittels einer telezentrischen Optik bereits bei dem Scanvorgang und/oder durch nachfolgende Bildverarbeitung entzerrt werden, dass zum Berechnen einer richtigen physiologischen Abbildung der zweidimensionalen Darstellung weitere digitalen Filter eingesetzt werden und dass durch diesen digitalen Filter eine Entzerrung oder Verzerrung der Form, insbesondere mit einer Tiefpass-, Band-pass-, Hochpass- oder freien Filterung, durchgeführt wird.
In erfindungsgemäßer Weise ist zunächst erkannt worden, dass in Abkehr von dem Vorgehen bei den aus der Praxis bekannten Scanverfahren auf eine genaue Positionierung des Gegenstands bzw. auf einen Abgleich der Bewegung der Scanvorrichtung in Bezug auf die Lage des Gegenstands weitgehend verzichtet werden kann. Insbesondere ist erkannt worden, dass ein einen Gegenstand scannender (beobachtender) Strahlengang nicht senkrecht zur Scanschicht gewählt werden muss. Vielmehr ist es möglich, den Strahlengang derart im Bezug auf die zu scannende Oberfläche des Gegenstands auszurichten, dass er einen beliebigen Winkel (Höhen- und Seitenwinkel) zur Scanschicht aufweist. Dadurch kann verblüffend einfach eine genaue Ausrichtung des zu scannenden Gegenstands vermieden und das Scanergebnis optimiert werden. Durch die beliebige Wahl des Winkels zwischen dem abtastenden Strahlengang und der Scanschicht ist es zusätzlich möglich, die Scanschicht in eine relativ beliebige Lage in Bezug auf die Bewegung der Scanvorrichtung zu bringen. Die Lage der Scanschicht ist nicht mehr von der Position der Scanvorrichtung derart abhängig, dass der abtastende Strahlengang zwingend senkrecht zur Scanschicht ausgerichtet sein muss. Dadurch wird zusätzlich vermieden, dass die Scanvorrichtung derart ausgerichtet sein muss, dass der abtastende Strahlengang immer senkrecht zu der Scanschicht auf den Gegenstand fällt. Die Bewegung der Scanvorrichtung ist nunmehr unabhängig von den geometrischen Gegebenheiten. Dadurch kann der Scanvorgang unabhängig von der Positionierung des zu scannenden Gegenstands erfolgen. Die Scanschicht lässt sich während des Scanvorgangs beliebig beeinflussen. Durch die schräge Abtastung des Gegenstands treten zwar Verzerrungen in den Bildinformationen auf. Diese können jedoch mittels ohnehin meist notwendiger nachfolgender Bildverarbeitung wirkungsvoll beseitigt oder zumindest erheblich reduziert werden. Insbesondere kann durch die schräge Abtastung für eine zweidimensionale Wiedergabe bereits eine vergleichsweise naturgetreue dreidimensionale Anmutung erreicht werden.

Mit dem Begriff Gegenstand ist in diesem Zusammenhang ein allgemeines geometrisches dreidimensionales Gebilde gemeint. Ein Gegenstand kann hier eine oder mehrere Oberflächen, einen oder mehrere Körper und/oder einen Raum bezeichnen. Wesentlich ist lediglich, dass ein Gegenstand durch Oberflächen begrenzt ist, die abtastbar sind. Diese Oberflächen können eben, gekrümmt, strukturiert oder in sonstiger Art und Weise ausgestaltet sein.

Das erfindungsgemäße Verfahren kann im Zusammenhang mit einer Erfassung eines dreidimensionalen farbigen Gegenstands hinsichtlich der zweidimensionalen Bildinformationen eingesetzt werden. Diese zweidimensionale Erfassung liefert Informationen über Farbe, Farbverläufe und Farbkontraste des zu scannenden Gegenstands. Hierzu stehen die verschiedensten aus der Praxis bekannten Verfahren zur Verfügung. Lediglich beispielhaft sei auf den Einsatz von Digitalkameras hingewiesen. Wesentlich hierbei ist häufig, dass die Farbe, die Farbverläufe und die Farbkontraste möglichst originalgetreu abgebildet werden. Hierzu kann der Einsatz von Farbmanagement (beispielsweise ICC-Profilen) notwendig sein. Abhängig von der jeweiligen Anwendungssituation können jedoch auch Schwarz/Weiß- oder Graustufenbilder als zweidimensionale Bildinformationen genügen.

In diesem Zusammenhang sei darauf hingewiesen, dass hier der Begriff "Farbe" allgemein zu verstehen ist. Insbesondere sollen schwarz, weiß und Graustufen durch den Begriff "Farbe" mit erfasst sein. Sie stellen letztendlich "entartete" Farben dar, die über keine Farbsättigung verfügen.

Ferner kann das erfindungsgemäße Verfahren im Zusammenhang mit einer dreidimensionalen Abtastung der Gegenstände Verwendung finden. Ziel der dreidimensionalen Abtastung ist es, Informationen bezüglich des Reliefs oder des Höhenprofils des Gegenstands zu erlangen. Hierfür sind prinzipiell sämtliche aus der Praxis bekannten Verfahren zum dreidimensionalen Erfassen von Gegenständen denkbar. Je nach gewünschtem Einsatzbereich könnten jedoch einzelne Verfahren besser geeignet sein als andere. Triangulationsverfahren liefern beispielsweise relativ schnell und einfach Informationen über das Höhenprofil des Gegenstands, sind gelegentlich jedoch wegen ihrer geringen Auflösung und wegen der Notwendigkeit einer geeigneten und präzisen Kameraausrichtung ungeeignet. Laserscanverfahren weisen diesen Nachteil nicht auf, können jedoch bedingt durch die Laufzeitmessung lediglich beschränkte Tiefenauflösung liefern. Hier sind wiederum konfokale Messsysteme vorteilhaft, die jedoch über einen lediglich geringen Messbereich verfügen und je nach Ausgestaltung äußerst langsam sind. Diese lediglich als beispielhaft und unvollständig zu betrachtende Auflistung zeigt, dass je nach Anforderung an die gewonnenen dreidimensionalen Bildinformationen ein geeignetes Scanverfahren gewählt werden muss.

Die Abtastung des Gegenstands kann zum einen lediglich hinsichtlich zweidimensionaler oder lediglich hinsichtlich dreidimensionaler Bildinformationen erfolgen. Zum anderen ist eine Kombination einer zweidimensionaler und einer dreidimensionale Abtastung denkbar. In letzterem Fall könnten die Abtastungen gleichzeitig oder zumindest weitgehend zeitgleich erfolgen. Dazu müsste die Scanvorrichtung über zwei geeignete Scanköpfe verfügen, die über den Gegenstand bewegt werden können. Zum einen könnten die beiden Scanköpfe unabhängig voneinander und in diesem Fall vorteilhafterweise an unterschiedlichen Stellen den Gegenstand abtasten. Andererseits ließen sich die beiden Scanköpfe derart nahe zueinander anordnen, dass sie nahe beieinander liegende Punkte oder Bereiche des Gegenstands oder gar durch geeignete Maßnahmen den gleichen Punkt oder Bereich abtasten. Alternativ zu einer gleichzeitigen oder weitgehend zeitgleichen Erzeugung der zwei- und dreidimensionalen Bildinformationen können die zwei- und dreidimensionalen Abtastungen nacheinander erfolgen.

Sowohl bei dem zweidimensionalen als auch bei dem dreidimensionalen Abtasten des Gegenstands sind der Winkel zwischen dem abtastenden Strahlengang und der Scanschicht und die Lage der Scanschicht gewissen Schranken unterworfen. So kann der Winkel zwischen abtastendem Strahlengang und der Scanschicht zwar relativ beliebig gewählt werden, sollte jedoch im Allgemeinen nicht zu klein gewählt werden. Je geringer der Winkel gewählt wird, umso dünner wird im Allgemeinen die Scanschicht ausfallen, wodurch der abtastbare Tiefenbereich sehr eingeschränkt wird. Jedoch sind auch hierbei Einsatzbereiche denkbar, bei denen selbst mit sehr flachen Winkeln hinreichend gute Ergebnisse erzielt oder sogar erwünschte Effekte erreicht werden können. Ferner könnten manche Seitenwinkel besser geeignet sein als andere. Dies wird insbesondere dann der Fall sein, wenn der Gegenstand oder Strukturen auf der Oberfläche des Gegenstands, wie beispielsweise Maserungen von Holz, eine Vorzugsrichtung aufweisen.

Ebenso wird im Allgemeinen die Lage der Scanschicht derart zu wählen sein, dass das Gewinnen der Bildinformationen noch hinreichend gewährleistet ist. So wird man häufig versuchen, die Scanschicht im Wesentlichen deckungsgleich mit oder zumindest parallel zu der Oberfläche des Gegenstands zu legen. Weist der Gegenstand strukturierte Oberflächen oder einen komplizierten geometrische Aufbau auf, so wird die Scanschicht im Allgemeinen so gewählt werden, dass in der Scanschicht die zu scannende Oberfläche des Gegenstands enthalten ist. Auch hier sind jedoch in Abhängigkeit des jeweiligen Anwendungsfalls andere Konstellationen denkbar. So kann die durch eine verkippte Scanschicht in einem oder manchen Bereichen entstehende Unschärfe erwünscht sein.

Durch die freie Wahl des Winkels zwischen dem abtastenden Strahlengang und der Scanschicht entstehen bei Verwendung eines Scanners, der ein Detektorarray oder -cluster aufweist, geschuppte Teilbilder, die nicht in einer Ebene liegen und insbesondere im Bezug zur Scanschicht verkippt sind. Deshalb müssen die einzelnen Teilbilder entzerrt werden, damit sie zu einem gemeinsamen Bild zusammenfügbar sind. Hierzu könnte eine telezentrische Optik verwendet werden, die die Verzerrungen durch Schrägabtastung bereits bei der Erzeugung der Bildinformationen entzerrt. Dadurch erscheinen bereits auf den einzelnen Teilbildern gleich große Längen gleich lang. Allerdings könnten die Teilbilder auch durch eine nachfolgende Bildverarbeitung entzerrt werden. Darüber hinaus stehen die verschiedensten aus der Praxis bekannten Verfahren zur Verfügung.

Während des Scanvorgangs wird die Scanvorrichtung oder zumindest Teile der Scanvorrichtung oder der Gegenstand selbst bewegt. Je nach Art des zu scannenden Gegenstands könnte die Bewegung dabei in unterschiedlicher Weise erfolgen. So könnte die Scanvorrichtung auf einer mäanderförmigen Bahn in einer Ebene geführt werden, wobei der abtastende Strahlengang von der Ebene weg orientiert ist. Allerdings könnte auch eine Bewegung entlang einer Kugeloberfläche oder anderer geometrischer Gebilde genutzt werden. Bevorzugter Weise ist die Scanvorrichtung jedoch in eine dreidimensionale Bewegung entlang eines kartesischen Koordinatensystems bewegbar. Die Bewegung könnte insbesondere entlang frei beweglicher Achsen x, y, z erfolgen.

Zum Erreichen eines möglichst einfachen Zusammenfügens einzelner Teilbilder ist es sinnvoll, bei einmal definierter Lage der Scanschicht und einmal definiertem Winkel zwischen abtastendem Strahlengang und Scanschicht die beiden Werte bei der Bewegung der Scanvorrichtung konstant zu halten. Dadurch ergibt sich der geringste Aufwand beim Zusammenfügen der Teilbilder. Allerdings ist dies nicht zwangläufig notwendig. Auch hier wären wieder Anwendungsfälle denkbar, die sich genau diesen Effekt zu Nutze machen.

Durch das Bewegen der Scanvorrichtung, Teile der Scanvorrichtung oder des Gegenstands selbst entstehen bei der Verwendung von Detektorarrays mehrere Teilbilder. Vorzugsweise werden die Teilbilder derart definiert, dass sie sich überlappen. Dabei können Überlappungen von bis zu 90 % und mehr sinnvoll sein. In sehr vielen Anwendungsfällen wird jedoch eine Überlappung in der Größenordnung von 50 % bis 75 % zu guten Ergebnissen führen.

Zum Durchführen des Scanvorgangs ist es meist notwendig, den zu scannenden Gegenstand während des Scanvorgangs mittels einer aktiven und/oder passiven Beleuchtungseinrichtung zu beleuchten. Als Beleuchtungseinrichtung können die verschiedensten aus der Praxis bekannten Mittel eingesetzt werden. So könnte beispielsweise ein halbkugelförmiger oder linienförmiger Strahler eingesetzt werden. Gleichzeitig kann die Beleuchtungseinrichtung auch durch mehrere Beleuchtungskörper aufgebaut sein. So könnte beispielsweise eine Reihe oder ein Array von LEDs (Light Emitting Diode) Verwendung finden, die nach dem Huygens'schen Prinzip einen Strahler mit komplexer Geometrie bilden. Durch die Beleuchtungseinrichtung könnte parallel gerichtetes Licht, aus allen oder mehreren Raumwinkeln kommendes Licht, punktförmig beleuchtendes Licht oder dergleichen erzeugt werden.

Vorzugsweise wird die Beleuchtungseinrichtung bei der Bewegung der Scanvorrichtung oder der Bewegung der bewegten Teile der Scanvorrichtung mitbewegt. Dabei kann die Beleuchtungseinrichtung mit der Scanvorrichtung verbunden sein. Zum anderen ist es jedoch möglich, dass die Beleuchtungseinrichtung unabhängig von der Scanvorrichtung bewegbar ist. Dabei könnte die Beleuchtungseinrichtung im Wesentlichen gleiche oder zumindest ähnliche Wege wie die Scanvorrichtung selbst zurücklegen. Jedoch ist es auch hier wiederum möglich, durch eine von der Scanvorrichtung unabhängige Bewegung eine besondere Ausleuchtung zu erzielen.

Die Beleuchtungsstärke und/oder -richtung der Beleuchtungseinrichtung könnte während der Bewegung der Beleuchtungseinrichtung konstant gehalten werden. Dadurch würde der zu scannende Gegenstand besonders gleichmäßig beleuchtet, wodurch sich besonders naturgetreue Abbildungen der Farben, Farbverläufe und Farbkontraste ergeben. Bei manchen zu scannenden Gegenständen, beispielsweise mit sehr unterschiedlichen Höhenprofilen, könnte die Beleuchtungsstärke auch in Abhängigkeit der jeweiligen Position in Bezug auf den zu scannenden Gegenstand angepasst werden. Dadurch ließen sich im Extremfall lediglich einzelne Raumwinkel beleuchten. Dies kann besonders einfach bei einem nach dem Huygens'schen Prinzip aufgebauten Strahler erreicht werden. Sind beispielsweise die einzelnen Teillichtquellen in einer Halbkugel mit Abstrahlung in Richtung Kugelinneren angeordnet, so kann durch gezieltes Einschalten, Abschalten oder allgemein Beeinflussen der Leuchtkraft einzelner Teillichtquellen eine bestimmte Raumrichtung der Beleuchtung festgelegt werden. Die Beleuchtung kann in allen Fällen dauerhaft oder gepulst ausgeführt sein.

Bei Gegenständen, die über ein derart ausgeprägtes Höhenprofil verfügen, dass eine Scanschicht nicht zur Erfassung der Bildinformationen ausreichend ist, könnten mehrere Scanschichten ausgebildet werden. Dadurch kann der Gegenstand bei jeder Scanschicht mit einer hohen Quantisierung (Anzahl der Höhenstufen) abgetastet werden. Da die Abbildungen für die zweidimensionale und dreidimensionale Abtastung streng parallel perspektivisch sind, sind die einzelnen Bilder stets deckungsgleich. Damit lassen sich sowohl die einzelnen zwei- und dreidimensionalen Abtastungen als auch die Abtastungen über mehrere Scanschichten deckungsgleich zusammenfügen. Dies ist insbesondere bei Schrägabtastung von Vorteil, da dadurch die bei Verwendung von Detektorarrays entstehenden geschuppten Teilbilder genau ineinander gefügt werden können. Es sind lediglich Anpassungen in Folge der Verzerrungen notwendig. Vorzugsweise werden, insbesondere bei dreidimensionaler Abtastung, die Bildinformationen im Bereich der einzelnen Scanschichten geeignet addiert.

Bei der Abtastung eines Gegenstands entlang mehrerer Scanschichten können die Scanschichten relativ beliebig zueinander liegen. Die einzelnen Schichten müssen nicht zwangsläufig parallel verlaufen. Sie könnten sich ebenso in beliebiger Weise und an beliebigen Stellen kreuzen. Vorteilhafter Weise, insbesondere wegen eines einfacheren Zusammenfügens der Bildinformationen entlang der einzelnen Scanschichten, sind die Scanschichten jedoch parallel zueinander ausgerichtet. Der Begriff "parallel" kann auch auf Scanschichten übertragen werden, die beispielsweise eine Kugeloberfläche, Teil einer Zylinderfläche, eines Ellipsoiden oder dergleichen umfassen. So könnten die einzelnen Scanschichten beispielsweise bei einer Ausgestaltung entlang einer Kugeloberfläche jeweils denselben Mittelpunkt aufweisen und sich lediglich im Radius unterscheiden.

Hinsichtlich einer möglichst umfassenden Abdeckung könnten die einzelnen Scanschichten derart gewählt werden, dass sich benachbarte Scanschichten in Richtung der Höhe überlappen. Dadurch ist gewährleistet, dass der gesamte Gegenstand abgetastet wird und keine Lücken in den gescannten Bildinformationen vorliegen. Soll eine möglichst geringe mehrfache Abtastung erfolgen, so könnten die Scanschichten derart gewählt werden, dass sich benachbarte Scanschichten lediglich berühren oder Überschneidungen lediglich im Rahmen der Messungenauigkeit zugelassen werden. Alternativ oder zusätzlich könnten die Scanschichten jedoch auch direkt aneinander stoßen, d.h. die beiden aneinander stoßenden Scanschichten liegen in einer Ebene. In den einzelnen Schichten könnte dann beispielsweise auf unterschiedliche Art und Weise, wie mit unterschiedlicher Auflösung oder mit unterschiedlichen Scanverfahren, abgetastet werden.

Der Übergang von einer Abtastung in einer Scanschicht zu einer Abtastung in einer weiteren Scanschicht kann auf verschiedene Art und Weise erfolgen. So kann zum einen die Scanvorrichtung um eine entsprechende Distanz verschoben werden, so dass sich die Scanvorrichtung näher oder weiter entfernt von dem Gegenstand befindet. Andererseits könnte durch optische Mittel, beispielsweise eine weitere Linse oder ein weiteres Linsensystem, der Messbereich der Scanvorrichtung verändert werden. Für die Änderung des Messbereichs stehen sämtliche aus der Praxis bekannten Verfahren zur Verfügung.

Zur weiteren Reduzierung des Aufwands beim Scannen könnte ein Scanvorgang in einer bestimmten Scanschicht oder in einem bestimmten Bereich einer Scanschicht lediglich bei Bedarf angestoßen werden. Das bedeutet: Wird beim Abtasten des Gegenstands eine Scanschicht verlassen, d.h. der abgetastete Punkt des Gegenstands verlässt beispielsweise den Messbereich der Scanvorrichtung oder den Bereich, in dem eine ausreichende Tiefenschärfe noch gegeben ist, so könnte ein Scanvorgang in der benachbarten Scanschicht ausgelöst werden. Soll der Aufwand noch weiter reduziert werden, so könnte der Bereich bestimmt werden, in dem der Gegenstand Anteile an der betreffenden Scanschicht enthält. Dies kann zum einen durch Bestimmen der Bereiche geschehen, in denen eine Scanschicht verlassen wurde. Andererseits können diese Bereiche auch durch einen ersten groben Scanvorgang über den gesamten Körper oder manuell festgelegt werden. Scanschichten könnte dann lediglich in diesen Bereichen abgetastet werden. Auf diese Weise ließe sich ein Gegenstand sukzessive und schichtweise abtasten.

Die Ausbildung mehrerer Scanschichten und das Steuern des Scanvorgangs können sowohl beim dreidimensionalen als auch beim zweidimensionalen Abtasten des Gegenstands genutzt werden. Bei der Erfassung des Gegenstands hinsichtlich der Farbe kann es vorkommen, dass Punkte des Gegenstands außerhalb des Tiefenschärfenbereichs des Scanners liegen und der Tiefenschärfebereich daher gedehnt werden soll. Auch hier sind die oben genannten Verfahren entsprechend anwendbar. Sollen lediglich die Bereiche einer Scanschicht gescannt werden, in die der Gegenstand tatsächlich hineinragt, so können die dreidimensionalen Bildinformationen zur Steuerung des Scanvorgangs genutzt werden. Jedoch kann auch hier eine manuelle Definition oder eine Festlegung der zu scannenden Bereiche durch einen Grobscan angewendet werden.

Die auf diese Weise erzeugten Bildinformationen können mit einer nachfolgenden Bildverarbeitung weiter entzerrt werden. Zur Entzerrung kommen im Allgemeinen digitale Filter zum Einsatz, die Verzerrungen kompensieren oder reduzieren. Hierzu stehen aus der Praxis bekannte Verfahren zur Verfügung. Insbesondere können jedoch auch die im Folgenden beschriebenen Verfahren eingesetzt werden, auch wenn die folgenden Abschnitte die Filter im Zusammenhang mit der Erzeugung einer zweidimensionalen Darstellung aufzeigen. Die Filter sind auch unabhängig von der Erzeugung einer zweidimensionalen Darstellung auf die zwei- und/oder dreidimensionalen Bildinformationen anwendbar.

Aus den derart gewonnenen und unter Umständen aufbereiteten zwei- und dreidimensionalen Bildinformationen kann eine zweidimensionale Darstellung erzeugt werden, die beispielsweise für eine Ausgabe der Bildinformationen über eine Druckvorrichtung geeignet ist. Die zweidimensionalen Bildinformationen könnten mit den dreidimensionalen Informationen derart kombiniert werden, dass eine weiter verbesserte dreidimensionale Anmutung der berechneten Darstellung entsteht. Hierzu könnten digitale Filter eingesetzt werden, die beispielsweise eine Entzerrung, Verzerrung, Tiefpass-, Bandpass-, Hochpass- oder eine freie Filterung im Frequenzbereich (beispielsweise FFT(Fast Fourrier Transformation)-Bereich) vorzugsweise auf den dreidimensionalen Daten der Form durchführen. Andererseits könnten die dreidimensionalen Bildinformationen dazu genutzt werden, um durch gezieltes Aufhellen und Abdunkeln eine virtuelle Raumausleuchtung zu berechnen. Die dreidimensionale Anmutung kann dann gut erreicht werden, wenn die dreidimensionalen Bildinformationen ohne Beeinflussung durch Farbe und die zweidimensionalen Bildinformationen ohne Beeinflussung durch Form erfasst wurde.

Die Kombination von dreidimensionalen Bildinformationen mit zweidimensionalen Bildinformationen wird beispielsweise bei dem als 6to5-Scan bekannten Verfahren genutzt. Dabei werden die sechs gemessenen Koordinaten eines Punktes (3x Farbe plus x-, y- und z-Koordinate) in fünf Koordinaten (3x Farbe plus x- und y-Koordinate, ohne z-Koordinate) umgerechnet. Die Höheninformationen werden im Wesentlichen mit Helligkeitswerten ausgedrückt.

Zum Erzeugen einer dreidimensionalen Anmutung stehen verschiedene Mittel zur Verfügung. Zum einen können zur physiologischen Anpassung der Höheninformationen stark unterschiedlichen Bogenlängen unterschiedlich stark gestaucht werden. Lange Bögen erscheinen für einen Betrachter weniger gerundet als kurze Bögen. Dieser Effekt könnte entsprechend kompensiert werden. Dazu werden die Strukturen als Funktion der Ortsfrequenz entzerrt, wobei hierzu digitale Filter mit einer Tiefpass-, Bandpass oder Hochpassfilterung zum Einsatz kommen. Aber auch Entzerrungs- oder Verzerrungsfilter über den gesamten Frequenzbereich (Filterung mit FFT(Fast Fourrier Transformation)) können angewendet werden.

Zum anderen können gezielt nichtlineare Verzerrungen durchgeführt werden. Beispielsweise durch Verzerren der Form bzw. der Funktion der Form kann der visuelle Eindruck der zweidimensionalen Darstellung geändert werden. Flache Oberflächen werden rund und stumpfe Körper spitz bzw. umgekehrt dargestellt. Hierzu könnte das aus der Praxis bekannte "Shape to Shade"-Verfahren Anwendung finden. Dabei könnten nicht nur die Höheninformationen verwendet werden, sondern auch deren Ableitungen. Damit können Steigungen und konvexe oder konkave Flächen herausgearbeitet werden.

Als weiteres Mittel kann die Farbe des virtuellen Gegenstands form- und beleuchtungsabhängig abgedunkelt oder aufgehellt werden. Auf diese Weise entsteht eine virtuelle Raumausleuchtung, die der natürlichen Raumausleuchtung nachempfunden ist. Vorteilhafter Weise kann die Raumausleuchtung jedoch in einem Rechner beliebig verändert und die verschiedensten Beleuchtungsrichtungen, -intensitäten und -muster getestet oder Lichtquellen aufaddiert werden. Dafür sind keine neuen Aufnahmen mehr notwendig.

Ferner können unterschiedliche Höhenbilder oder Funktionen der Höhe überlagert werden. Hierbei ist es insbesondere nicht von Bedeutung, auf welche Weise die Informationen gewonnen oder wie die Bildinformationen gefiltert wurden.

Darüber hinaus können die Höheninformationen zum gezielten Steuern des Eindrucks von positiv oder negativ gekrümmten Oberflächen genutzt werden. Innerhalb eines maskierten Bereichs kann die empfundene Steigung unter Verwendung der dreidimensionalen Bildinformationen gezielt beeinflusst werden. Dies lässt sich beispielsweise bei der Darstellung von Strukturen mit symmetrischem Aufbau nutzen. Üblicherweise werden derartige Strukturen - beispielsweise bei Hölzern - in Abhängigkeit von dem Betrachtungs- oder Beleuchtungswinkeln konvex oder konkav empfunden. Dies kann durch gezielte Verzerrung der Symmetrie der Struktur unterdrückt werden.

Obige als unvollständig zu betrachtende Auflistung möglicher Filterungen zeigt, wie die durch schräge Abtastung gewonnenen Bildinformationen gezielt beeinflusst werden können. Insbesondere ist es möglich trotz der Verzerrungen, die durch das Scannen unter einem beliebigen Winkel zur Scanschicht entstehen, eine sehr gute dreidimensionale Anmutung der wiedergegebenen zweidimensionalen Darstellung zu erreichen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung einiger Ausführungsbeispiele der Erfindung zu verweisen.

Das erfindungsgemäße Verfahren ist im Zusammenhang mit einem reinen Farbbild-Scanner einsetzbar. Dabei wird die Farbe und Form gleichzeitig durch eine gemeinsame Beleuchtungseinrichtung erfasst. Die Scanschicht, der Raumbeleuchtungswinkel und Winkel (Höhen- und Seitenwinkel) des scannenden Strahlengangs in Bezug auf die Scanschicht sind frei einstellbar. Der oder die Beleuchtungskörper können aktive oder passive Strahler umfassen und beliebige Gestalt, beispielsweise eine Halbkugel oder eine Ebene, aufweisen. Allerdings lassen sich auch beliebige Strahlerformen nach dem Huygens'schen Prinzip als Addition kleiner elementarer Lichtquellen aufbauen. Die Lichtquellen sind in kleinen Abmessungen und Abständen zueinander angeordnet. Die Beleuchtungseinrichtung ist mit der Scanvorrichtung mitlaufend ausgestaltet und kann dauerhaftes oder gepulstes Licht aussenden. Ein derartiges Scanverfahren findet beispielsweise bei der Erfassung von Holzdekor Anwendung und zeichnet sich durch einen relativ schnellen Scanvorgang aus.

Daneben kann auch eine reine dreidimensionale Erfassung des Gegenstands erfolgen. Dabei wird der Gegenstand punktweise oder in Arrays von Punkten abgetastet. Auch hierbei ist der Winkel des scannenden Strahlengangs beliebig zur Scanschicht orientiert. Diese Ausgestaltung der Erfindung kann bei dem Erzeugen von Daten zur Herstellung von Prägewalzen genutzt werden.

Ferner können zweidimensionale und dreidimensionale Bildinformationen getrennt erfasst werden (6to5-Scanner). Dabei werden mittels eines Scankopfs die Farbe, Farbverläufe und Farbkontraste - also die zweidimensionalen Bildinformationen - erfasst, während ein weiterer Messkopf die Form des Gegenstands - die dreidimensionalen Bildinformationen - abtastet. Auf diese Weise können Basisdaten für räumlich anmutende und stärker gezeichnete zweidimensionalen Darstellungen erstellt werden.

## Patentansprüche

1. Verfahren zum Erzeugen von Bildinformationen aus einem zu scannenden Gegenstand mittels einer Scanvorrichtung, wobei der zu scannende Gegenstand eine oder mehrere Oberflächen, einen oder mehrere Körper und/oder einen Raum umfassen kann, wobei die Scanvorrichtung oder zumindest Teile der Scanvorrichtung oder der Gegenstand selbst während des Scanvorgangs bewegt wird, wobei der zu scannende Gegenstand durch die Scanvorrichtung zum Gewinnen von zweidimensionalen Bildinformationen, d.h. bezüglich Farbe, Farbverläufe und Farbkontraste, und zum Gewinnen von dreidimensionalen Bildinformationen, d.h. bezüglich des Reliefs oder des Höhenprofils des Gegenstands, im Bereich einer Scanschicht gescannt wird, wobei aus den gewonnenen zwei- und dreidimensionalen Bildinformationen unter Verwendung digitaler Filter eine zweidimensionale Darstellung berechnet wird, und wobei beim Übergang zu der zweidimensionalen Darstellung die dreidimensionalen Bildinformationen mit den zweidimensionalen Bildinformationen derart kombiniert werden, dass eine naturgetreue dreidimensionale Anmutung der berechneten zweidimensionalen Darstellung erreicht wird und wobei Höheninformationen vorzugsweise mit Helligkeitswerten ausgedrückt werden,
**dadurch gekennzeichnet, dass** der den Gegenstand abtastende Strahlengang in einem beliebigen Winkel zur Scanschicht orientiert eingestellt wird und/ oder dass die Scanschicht in einer beliebigen Lage bezüglich des zu scannenden Gegenstands gewählt wird, wobei durch freie Wahl des Winkels zwischen dem abtastenden Strahlengang und der Scanschicht geschuppte Teilbilder entstehen, die nicht in einer Ebene liegen und insbesondere im Bezug zur Scanschicht verkippt sind, wodurch die einzelnen Teilbilder entzerrt werden müssen, damit sie zu einem gemeinsamen Bild zusammenfügbar sind,
dass Verzerrungen, die durch den beliebigen Winkel zwischen dem abtastenden Strahlengang und der Scanschicht hervorgerufen werden, mittels einer telezentrischen Optik bereits bei dem Scanvorgang und/oder durch nachfolgende Bildverarbeitung entzerrt werden,
dass zum Berechnen einer richtigen physiologischen Abbildung der zweidimensionalen Darstellung weitere digitalen Filter eingesetzt werden und dass durch diese digitalen Filter eine Entzerrung oder Verzerrung der Form, insbesondere mit einer Tiefpass-, Band-pass-, Hochpass- oder freien Filterung, durchgeführt wird.

2. Verfahren nach Anspruch 1, **dadurch gekennzeichnet, dass** die Abtastungen hinsichtlich zweidimensionaler und dreidimensionaler Bildinformationen gleichzeitig, weitgehend zeitgleich oder nacheinander vorgenommen werden.

3. Verfahren nach Anspruch 1 oder 2, **dadurch gekennzeichnet, dass** sich die durch den beliebigen Winkel zwischen dem abtastenden Strahlengang und der Scanschicht entstehenden Teilbilder überlappen.

4. Verfahren nach einem der Ansprüche 1 bis 3, **dadurch gekennzeichnet, dass** der Gegenstand während des Scanvorgangs mittels einer Beleuchtungseinrichtung beleuchtet und/oder die Beleuchtungseinrichtung mit der Scanvorrichtung oder den bewegten Teilen der Scanvorrichtung mitbewegt wird.

5. Verfahren nach Anspruch 4, **dadurch gekennzeichnet, dass** die Beleuchtungsstärke und/oder Beleuchtungsrichtung der Beleuchtungseinrichtung während der Bewegung konstant gehalten oder in Abhängigkeit von der jeweiligen Position der Beleuchtungseinrichtung in Bezug auf den zu scannenden Gegenstand angepasst werden.

6. Verfahren nach einem der Ansprüche 1 bis 5, **dadurch gekennzeichnet, dass** der Gegenstand entlang mehrerer Scanschichten abgetastet wird.

7. Verfahren nach Anspruch 6, **dadurch gekennzeichnet, dass** die Scanschichten derart gewählt werden, dass sich benachbarte Scanschichten überlappen oder aneinander stoßen.

8. Verfahren nach Anspruch 6 oder 7 **dadurch gekennzeichnet, dass** die Scanvorrichtung derart gesteuert wird, dass in einer Scanschicht der Gegenstand lediglich in den Bereichen abgetastet wird, in denen die Scanschicht durch den Gegenstand durchdrungen wird.

9. Verfahren nach einem der Ansprüche 6 bis 8, **dadurch gekennzeichnet, dass** die Informationen aus den Abtastungen entlang der einzelnen Scanschichten zu einer gemeinsamen Bildinformation zusammengefügt werden.

10. Verfahren nach einem der Ansprüche 1 bis 9, **dadurch gekennzeichnet, dass** die Farben in der zweidimensionalen Darstellung basierend auf die dreidimensionalen Bildinformationen durch eine virtuelle Raumausleuchtung aufgehellt oder abgedunkelt werden.

## Claims

1. Method for generating image information from an object to be scanned by means of a scanning device, wherein the object to be scanned may comprise one or more surfaces, one or more members and/or a space, wherein the scanning device or at least portions of the scanning device or the object itself is/are moved during the scanning operation, wherein the object to be scanned is scanned by the scanning device in order to obtain two-dimensional image information, that is to say, with respect to colour, colour progressions and colour contrasts, and to obtain three-dimensional image information, that is to say, with respect to the relief or the height profile of the object, in the region of a scanning layer, wherein from the two and three-dimensional image information obtained using digital filters a two-dimensional display is calculated, and wherein when transferring to the two-dimensional display the three-dimensional image information is combined with the two-dimensional image information in such a manner that a realistic three-dimensional impression of the calculated two-dimensional display is achieved and wherein height information is preferably expressed with brightness values,
**characterised in that** the beam path which scans the object is adjusted so as to be orientated at any angle with respect to the scanning layer, and/or **in that** the scanning layer is selected in any position with respect to the object to be scanned, wherein as a result of the free selection of the angle between the scanning beam path and the scanning layer there are produced imbricated part-images which are not located in a plane and which in particular are tilted with respect to the scanning layer, whereby the individual part-images have to be rectified so that they can be combined to form a common image,
**in that** distortions which are brought about by the random angle between the scanning beam path and the scanning layer are rectified by means of a telecentric optical unit already during the scanning operation and/or by means of subsequent image processing,
**in that** in order to calculate a correct physiological representation of the two-dimensional display additional digital filters are used and **in that** as a result of these digital filters a rectification or distortion of the shape is carried out, in particular using a low-pass filter, a band-pass filter, a high-pass filter or free filtering.

2. Method according to claim 1, **characterised in that** the scanning operations with respect to two-dimensional and three-dimensional image information are carried out simultaneously, substantially simultaneously or one after the other.

3. Method according to claim 1 or 2, **characterised in that** the part-images which are produced as a result of the random angle between the scanning beam path and the scanning layer overlap each other.

4. Method according to any one of claims 1 to 3, **characterised in that** the object is illuminated during the scanning operation by means of an illumination device and/or the illumination device is also moved with the scanning device or the moved portions of the scanning device.

5. Method according to claim 4, **characterised in that** the illumination intensity and/or illumination direction of the illumination device is/are kept constant during the movement or are adapted in accordance with the respective position of the illumination device with respect to the object to be scanned.

6. Method according to any one of claims 1 to 5, **characterised in that** the object is scanned along a plurality of scanning layers.

7. Method according to claim 6, **characterised in that** the scanning layers are selected in such a manner that adjacent scanning layers overlap or are in abutment with each other.

8. Method according to claim 6 or 7, **characterised in that** the scanning device is controlled in such a manner that in a scanning layer the object is scanned only in the regions in which the scanning layer is penetrated by the object.

9. Method according to any one of claims 6 to 8, **characterised in that** the information from the scanning operations along the individual scanning layers is combined to form common image information.

10. Method according to any one of claims 1 to 9, **characterised in that** the colours in the two-dimensional display are brightened or darkened based on the three-dimensional image information by means of a virtual spatial illumination.

## Revendications

1. Procédé de production d'informations d'images à partir d'un objet à scanner au moyen d'un dispositif de scannage, l'objet à scanner pouvant comprendre une ou plusieurs surfaces, un ou plusieurs corps et/ou un espace, le dispositif de scannage ou au moins des parties du dispositif de scannage ou l'objet lui-même étant déplacé (es) pendant le processus de scannage, l'objet à scanner étant scanné dans la zone d'une couche de scannage par le dispositif de scannage pour obtenir des informations d'images en deux dimensions, c'est-à-dire en ce qui concerne la couleur, les dégradés de couleurs et les contrastes de couleurs, et pour obtenir des informations d'images en trois dimensions, c'est-à-dire en ce qui concerne le relief ou le profil de hauteur de l'objet, une représentation en deux dimensions étant calculée à partir des informations d'images en deux dimensions et en trois dimensions acquises en utilisant des filtres numériques, et les informations d'images en trois dimensions étant, lors de la transition vers la représentation en deux dimensions, combinées avec les informations d'images en deux dimensions de telle sorte qu'un sentiment de perception en trois dimensions réaliste de la représentation en deux dimensions calculée est obtenu, et des informations de hauteur étant exprimées de préférence avec des valeurs de luminosité,
**caractérisé en ce que** le trajet des rayons balayant l'objet est réglé en étant orienté en formant un angle arbitraire avec la couche de scannage et/ou **en ce que** la couche de scannage est choisie dans une position arbitraire par rapport à l'objet à scanner, des parties d'images en écailles résultant du libre choix de l'angle entre le trajet des rayons de balayage et la couche de scannage, ces parties d'images n'étant pas situées dans un plan et étant en particulier basculées par rapport à la couche de scannage, ce qui fait que les parties d'images individuelles doivent être corrigées afin de pouvoir être assemblées en une image,
**en ce que** des distorsions qui sont suscitées par l'angle arbitraire entre le trajet des rayons de balayage et la couche de scannage sont corrigées au moyen d'une optique télécentrique déjà lors du processus de scannage et/ou par un traitement d'images ultérieur,
**en ce que** d'autres filtres numériques sont utilisés pour le calcul d'une reproduction physiologique correcte de la représentation en deux dimensions, et **en ce qu'**une correction ou distorsion de la forme, en particulier avec un filtrage passe-bas, à bande passante, passe-haut ou libre est effectuée par ces filtres numériques.

2. Procédé selon la revendication 1, **caractérisé en ce que** les balayages concernant des informations d'images en deux dimensions et en trois dimensions sont effectués simultanément, largement en même temps ou les uns après les autres.

3. Procédé selon la revendication 1 ou 2, **caractérisé en ce que** les images partielles suscitées par l'angle arbitraire entre le trajet des rayons de balayage et la couche de scannage se chevauchent.

4. Procédé selon l'une des revendications 1 à 3, **caractérisé en ce que**, pendant le processus de scannage, l'objet est éclairé au moyen d'un dispositif d'éclairage, et/ou le dispositif d'éclairage est déplacé solidairement avec le dispositif de scannage ou avec les parties déplacées du dispositif de scannage.

5. Procédé selon la revendication 4, **caractérisé en ce que** l'intensité d'éclairage et/ou la direction d'éclairage du dispositif d'éclairage sont maintenues constantes pendant le déplacement ou sont adaptées en fonction de la position respective du dispositif d'éclairage par rapport à l'objet à scanner.

6. Procédé selon l'une des revendications 1 à 5, **caractérisé en ce que** l'objet est balayé le long de plusieurs couches de scannage.

7. Procédé selon la revendication 6, **caractérisé en ce que** les couches de scannage sont choisies de telle sorte que des couches de scannage voisines se chevauchent ou se touchent.

8. Procédé selon la revendication 6 ou 7, **caractérisé en ce que** le dispositif de scannage est commandé de telle sorte que, dans une couche de scannage, l'objet est balayé uniquement dans les zones dans lesquelles la couche de scannage est traversée par l'objet.

9. Procédé selon l'une des revendications 6 à 8, **caractérisé en ce que** les informations en provenance des balayages le long des différentes couches de scannage sont assemblées pour former une information d'images commune.

10. Procédé selon l'une des revendications 1 à 9, **caractérisé en ce que** les couleurs dans la représentation en deux dimensions sont éclaircies ou foncées sur la base des informations d'images en trois dimensions par un éclairage ambiant virtuel.
